# EUROPEAN PATENT SPECIFICATION

(11) **EP 3 290 231 B1**
(45) Date of publication and mention of the grant of the patent: **20.03.2019**
(21) Application number: 17183925.1
(22) Date of filing: 31.07.2017
(51) Int. Cl.: B60C 9/02

(54) **TWO-WHEELED VEHICLE TIRE**
REIFEN FÜR ZWEIRÄDRIGES FAHRZEUG
PNEU DE VÉHICULE À DEUX ROUES

(30) Priority: 02.09.2016 JP 2016171546
(43) Date of publication of application: 07.03.2018
(73) Proprietor: Sumitomo Rubber Industries, Ltd., Kobe-shi, Hyogo-ken (JP)
(72) Inventor: OTANI, Masafumi, Kobe-shi, Hyogo 651-0072 (JP); NAKAGAWA, Mamoru, Kobe-shi, Hyogo 651-0072 (JP)
(74) Representative: Manitz Finsterwald Patentanwälte PartmbB

(56) References cited:
- JP-A- 2016 037 086
- JP-A- 2016 037 126

## Description

### BACKGROUND OF THE INVENTION

### Field of the Invention

The present invention relates to a two-wheeled vehicle tire.

### Description of the Background Art

When a two-wheeled vehicle runs, a load is applied to each side portion of each tire. When the stiffness of each side portion is not sufficient, deformation of the side portion is increased by the load. This can be a factor for deterioration of handling stability. On the other hand, excessive side portion stiffness causes deterioration of ride comfort.

There are tires each including an insulation in each side portion in order to increase the stiffness of the side portion. Japanese Laid-Open Patent Publication Nos. 2006-142922 and 2015-67005 each disclose a two-wheeled vehicle tire that achieves favorable ride comfort while improving handling stability by an insulation. The document JP2016037126A discloses a tire for a two-wheeled vehicle with improved rigidity and reduced rolling, wherein reinforcement rubber layers extend from the tread to the bead of the tire with a predefined width ratio. The document JP2016037086A discloses a pneumatic tire with improved turnability and absorptivity, wherein insulations are separately arranged in the axial direction, and are joined to an inner surface of an inner liner on the inside in the axial direction of a sidewall.

With improvement in performance of two-wheeled vehicles, tires providing further improved ride comfort have been desired. When a vehicle accelerates/decelerates or receives impact from a road surface, a high load is applied to each side portion of each tire. At this time, deformation of the tire occurs from the vicinity of the end of the apex of a bead. This deformation can be a factor for deterioration of ride comfort. By reducing the deformation, ride comfort provided when a high load is applied can be improved. In order to suppress the deformation, a method of increasing the sizes of the side portion and the components thereof, such as increasing the width of the side portion and increasing the length of an apex, is conceivable. However, this increases the stiffness of the side portion. This can be a factor for deterioration of ride comfort due to excessive stiffness.

An object of the present invention is to provide a two-wheeled vehicle tire providing improved ride comfort.

### SUMMARY OF THE INVENTION

A two-wheeled vehicle tire according to the present invention includes a tread, a pair of beads, a carcass, and a pair of insulations. The carcass includes a carcass ply, and the carcass ply includes a main portion extending from an axially inner side of one of the beads to an axially inner side of the other of the beads. Each insulation extends from between the bead and the main portion to a vicinity of a shoulder portion of the tread. Each bead includes a core and an apex extending from the core outward in a radial direction. In the radial direction, an inner edge of the insulation is located inward of an end of the apex, and an outer edge of the insulation is located outward of an edge of the tread.

Preferably, a height Li in the radial direction from the inner edge of the insulation to the end of the apex is equal to or greater than half a height Hap, in the radial direction, of the apex.

According to the present invention, when a center of gravity of the apex on a cross-section perpendicular to a circumferential direction is denoted by G, the height Li in the radial direction from the inner edge of the insulation to the end of the apex is equal to or greater than a height Lg in the radial direction from the center of gravity G to the end of the apex.

Preferably, the height Li in the radial direction from the inner edge of the insulation to the end of the apex is not less than 8 mm and not greater than 15 mm.

Preferably, a height Lo in the radial direction from the edge of the tread to the outer edge of the insulation is not less than 5 mm and not greater than 15 mm.

Preferably, the insulation has a thickness T of not less than 0.3 mm and not greater than 1.2 mm.

Preferably, the insulation has a hardness HD of not less than 70 and not greater than 98.

Preferably, a height Lb from a bead base line to the end of the apex is not less than 18 mm and not greater than 30 mm.

The present inventors have examined for a side portion structure for achieving excellent ride comfort even when a high load is applied. As a result, the present inventors have found that deformation from an end of an apex is effectively suppressed by inserting an insulation between a bead and a carcass ply at the axially inner side of the bead.

In the tire, each insulation extends from between the bead and the main portion of the carcass ply to the vicinity of the shoulder portion of the tread. In the tire, the insulation is located between the bead and the carcass ply at the axially inner side of the bead. In the radial direction, the outer edge of the insulation is located outward of the edge of the tread, and the inner edge of the insulation is located inward of the end of the apex. Because of this configuration, the insulation effectively suppresses deformation from the end of the apex. With the tire, deterioration of ride comfort due to this deformation is suppressed. In the tire, it is not necessary to increase the sizes of each side portion and the components thereof in order to suppress deformation from the end of the apex. In the tire, the stiffness of each side portion is appropriately reduced. With the tire, deterioration of ride comfort due to the stiffness being great is suppressed. With the tire, excellent ride comfort is achieved.

### BRIEF DESCRIPTION OF THE DRAWINGS

FIG. 1 is a cross-sectional view of a portion of a pneumatic tire according to one embodiment of the present invention; and
FIG. 2 is an enlarged cross-sectional view of a portion of the tire in FIG. 1.

### DESCRIPTION OF THE PREFERRED EMBODIMENTS

Hereinafter, the present invention will be described in detail based on preferred embodiments with appropriate reference to the drawings.

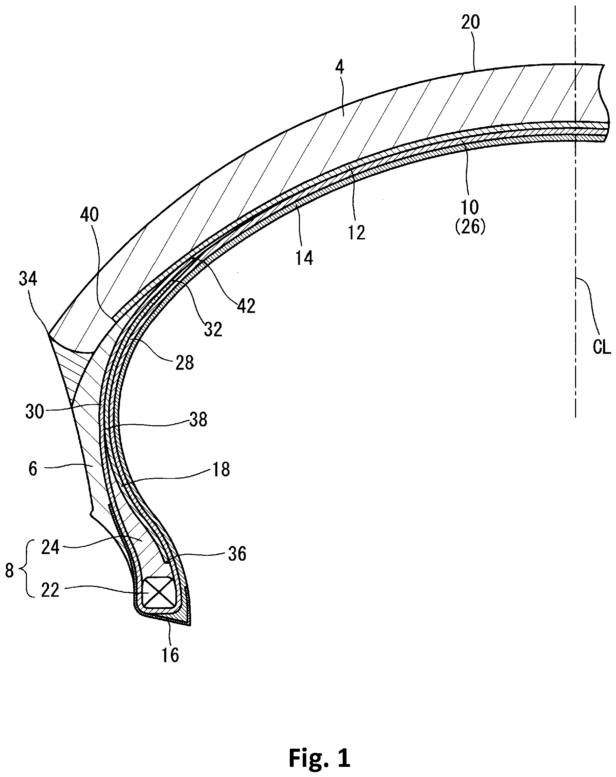

FIG. 1 shows a cross-section of a pneumatic tire 2. In FIG. 1, the up-down direction is the radial direction of the tire 2, the right-left direction is the axial direction of the tire 2, and the direction perpendicular to the surface of the sheet is the circumferential direction of the tire 2. The tire 2 has a shape that is substantially bilaterally symmetrical about an alternate long and short dash line CL in FIG. 1, except for a tread pattern. The alternate long and short dash line CL represents the equator plane of the tire 2. The tire 2 is mounted to a two-wheeled vehicle. The tire 2 is mounted particularly to the rear wheel of the two-wheeled vehicle.

The tire 2 includes a tread 4, a pair of sidewalls 6, a pair of beads 8, a carcass 10, a band 12, an inner liner 14, a pair of chafers 16, and a pair of insulations 18.

The tread 4 is formed from a crosslinked rubber. The tread 4 has a shape that is convex outward in the radial direction. The tread 4 has a tread surface 20. The tread surface 20 is brought into contact with a road surface. Although not shown, grooves may be formed on the tread 4. In this case, the tread pattern is formed by the grooves.

Each sidewall 6 extends from the edge of the tread 4 substantially inward in the radial direction. The sidewall 6 is formed from a crosslinked rubber that is excellent in cut resistance and weather resistance. The sidewall 6 prevents the carcass 10 from being damaged.

Each bead 8 is located substantially inward of the sidewall 6 in the axial direction. The bead 8 includes a core 22 and an apex 24 extending from the core 22 outward in the radial direction. The core 22 has a ring shape and includes a wound non-stretchable wire. A typical material of the wire is steel. The apex 24 is tapered outward in the radial direction. The apex 24 is formed from a highly hard crosslinked rubber.

The carcass 10 extends on and between the beads 8 at both sides and along the tread 4 and the sidewalls 6. The carcass 10 includes a carcass ply 26. The carcass ply 26 is turned up around the cores 22. The carcass ply 26 includes a main portion 28 and turned-up portions 30. The main portion 28 extends from the axially inner side of one of the beads 8 to the axially inner side of the other of the beads 8. Each turned-up portion 30 extends substantially in the radial direction through the axially outer side of the bead 8. The turned-up portion 30 extends to the inner side of the band 12. The turned-up portion 30 and the band 12 have an overlap. The carcass 10 may be formed from two or more carcass plies 26.

Although not shown, the carcass ply 26 includes multiple cords aligned with each other, and a topping rubber. In this embodiment, the absolute value of the angle of each cord relative to the equator plane is 65° to 90°. The cords are formed from an organic fiber. Examples of preferable organic fibers include polyester fibers, nylon fibers, rayon fibers, polyethylene naphthalate fibers, and aramid fibers.

The band 12 is located inward of the tread 4 in the radial direction. The band 12 is located outward of the carcass 10 in the radial direction. The band 12 is laminated on the carcass 10. Although not shown, the band 12 includes a cord and a topping rubber. The cord is helically wound. The band 12 has a so-called jointless structure. The cord extends substantially in the circumferential direction. The angle of the cord relative to the circumferential direction is not greater than 5° and further not greater than 2°. The band 12 can contribute to the stiffness, in the radial direction, of the tire 2. The band 12 can suppress influence of centrifugal force acting during running. The tire 2 has excellent high-speed stability. A preferable material of the cord is steel. An organic fiber may be used for the cord. Examples of preferable organic fibers include nylon fibers, polyester fibers, rayon fibers, polyethylene naphthalate fibers, and aramid fibers.

The inner liner 14 is located inward of the carcass 10. The inner liner 14 is joined to the inner surface of the carcass 10. The inner liner 14 is formed from a crosslinked rubber. A rubber that is excellent in air blocking property is used for the inner liner 14. A typical base rubber of the inner liner 14 is an isobutylene-isoprene-rubber or halogenated isobutylene-isoprene-rubber. The inner liner 14 maintains the internal pressure of the tire 2.

Each chafer 16 is located in the vicinity of the bead 8. When the tire 2 is mounted onto the rim, the chafer 16 comes into contact with the rim. Because of this contact, the vicinity of the bead 8 is protected. In this embodiment, each chafer 16 includes a fabric and a rubber with which the fabric is impregnated.

Each insulation 18 is located outward of the main portion 28 in the axial direction. The insulation 18 is located between the main portion 28 and the turned-up portion 30. The insulation 18 is located inward of the bead 8 in the axial direction. The insulation 18 extends substantially outward in the radial direction from between the bead 8 and the main portion 28. The insulation 18 extends to the vicinity of a shoulder portion of the tread 4. In the radial direction, an outer edge 32 of the insulation 18 is located outward of an edge 34 of the tread 4, and an inner edge 36 of the insulation 18 is located inward of an end 38 of the apex 24. As shown in the drawing, the thickness of the insulation 18 is substantially uniform. The insulation 18 is formed from a crosslinked rubber.

In the embodiment of FIG. 1, the number of carcass plies 26 is one. When the carcass 10 includes a plurality of carcass plies, each insulation 18 is located between the bead 8 and the main portion located at the axially outermost position in the side portion, of the main portions of these carcass plies. The insulation 18 is located between the main portion located at the axially outermost position and the turned-up portion located at the axially innermost position.

Hereinafter, advantageous effects of the present invention will be described.

The present inventors have examined for a side portion structure for achieving excellent ride comfort even when a high load is applied. As a result, the present inventors have found that deformation from an end of an apex is effectively suppressed by inserting an insulation between a bead and a carcass ply at the axially inner side of the bead.

In the tire 2, each insulation 18 extends from between the bead 8 and the main portion 28 of the carcass ply 26 to the vicinity of the shoulder portion of the tread 4. In the tire 2, the insulation 18 is located between the bead 8 and the carcass ply 26 at the axially inner side of the bead 8. In the radial direction, the outer edge 32 of the insulation 18 is located outward of the edge 34 of the tread 4, and the inner edge 36 of the insulation 18 is located inward of the end 38 of the apex 24. Because of this configuration, the insulation 18 effectively suppresses deformation from the end 38 of the apex 24. With the tire 2, excellent ride comfort is achieved even when a high load is applied thereto.

In the tire 2, it is not necessary to increase the sizes of each side portion and the components thereof in order to suppress deformation from the end 38 of the apex 24. In the tire 2, the stiffness of each side portion is appropriately reduced. With the tire 2, deterioration of ride comfort due to increase in the stiffness is suppressed. With the tire 2, excellent ride comfort is achieved. Furthermore, in the tire 2, the lengths of each apex 24 and each turned-up portion 30 and the width of each side portion do not need to be increased, and thus an increase in the weight of the tire 2 is suppressed. An increase in the manufacturing cost is suppressed. For the tire 2, an appropriate weight and manufacturing cost are achieved.

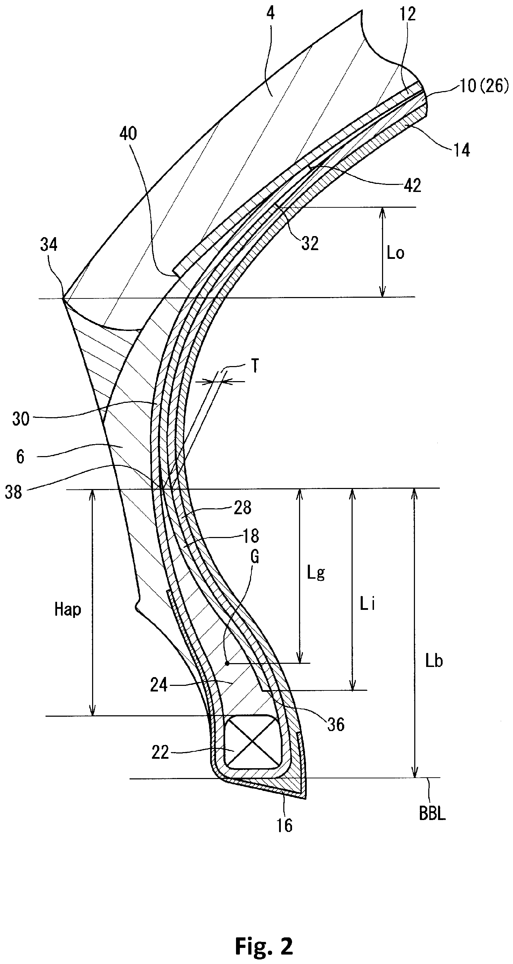

FIG. 2 is an enlarged cross-sectional view showing the side portion of the tire 2 in FIG. 1. In FIG. 2, the up-down direction is the radial direction, the right-left direction is the axial direction, and the direction perpendicular to the surface of the sheet is the circumferential direction. In FIG. 2, a solid line BBL is a bead base line. The bead base line BBL is a line that defines the rim diameter (see JATMA) of a rim. The bead base line BBL extends in the axial direction.

In FIG. 2, a double-headed arrow Li represents the height in the radial direction from the inner edge 36 of the insulation 18 to the end 38 of the apex 24. A double-headed arrow Hap represents the height, in the radial direction, of the apex 24. That is, the double-headed arrow Hap represents the distance in the radial direction from the radially inner edge of the apex 24 to the end 38 of the apex 24. In the radial direction, the insulation 18 preferably extends to the center, in the radial direction, of the apex 24 or extends to the inner side of the center, in the radial direction, of the apex 24. That is, the height Li is preferably equal to or greater than half the height Hap. Because of this configuration, the insulation 18 can effectively reinforce the apex 24. The insulation 18 effectively suppresses deformation from the end 38 of the apex 24. With the tire 2, excellent ride comfort is achieved even when a high load is applied thereto.

In FIG. 2, a point G is the center of gravity of the apex 24. A double-headed arrow Lg represents the height in the radial direction from the center of gravity G to the end 38 of the apex 24. In the radial direction, the insulation 18 extends to the center of gravity G or extends to the inner side of the center of gravity G. That is, the height Li is equal to or greater than the height Lg. Because of this configuration, the insulation 18 can more effectively reinforce the apex 24. The insulation 18 effectively suppresses deformation from the end 38 of the apex 24. With the tire 2, excellent ride comfort is achieved even when a high load is applied thereto.

Preferably, in the radial direction, the insulation 18 does not extend to the inner side of the inner edge of the apex 24. That is, the height Li is preferably equal to or less than the height Hap. By making the height Li equal to or less than the height Hap, the influence of the insulation 18 on the stiffness of the side portion is appropriately suppressed. With the tire 2, deterioration of ride comfort due to increase in the stiffness is suppressed. With the tire 2, excellent ride comfort is achieved.

The height Li is preferably not less than 8 mm. By making the height Li not less than 8 mm, the insulation 18 can effectively reinforce the apex 24. The insulation 18 effectively suppresses deformation from the end 38 of the apex 24. With the tire 2, excellent ride comfort is achieved even when a high load is applied thereto. From this standpoint, the height Li is more preferably not less than 9 mm. The height Li is preferably not greater than 15 mm. By making the height Li not greater than 15 mm, the influence of the insulation 18 on the stiffness of the side portion is appropriately suppressed. With the tire 2, deterioration of ride comfort due to increase in the stiffness is suppressed. With the tire 2, excellent ride comfort is achieved. From this standpoint, the height Li is more preferably not greater than 13 mm and further preferably not greater than 11 mm. The height Li is most preferably 9.5 mm.

As shown in FIG. 2, the outer edge 32 of the insulation 18 is preferably located outward of an edge 40 of the band 12 in the radial direction. Because of this configuration, the insulation 18 effectively suppresses deformation from the end 38 of the apex 24. With the tire 2, excellent ride comfort is achieved even when a high load is applied thereto.

As described above, in this embodiment, each turned-up portion 30 has an overlap with the band 12. In this case, as shown in FIG. 2, the outer edge 32 of the insulation 18 is preferably located inward of an edge 42 of the turned-up portion 30 in the radial direction. Because of this configuration, the influence of the insulation 18 on the stiffness of the side portion is appropriately suppressed. With the tire 2, deterioration of ride comfort due to increase in the stiffness is suppressed. With the tire 2, excellent ride comfort is achieved.

In FIG. 2, a double-headed arrow Lo represents the height in the radial direction from the edge 34 of the tread 4 to the outer edge 32 of the insulation 18. The height Lo is preferably not less than 5 mm. By making the height Lo not less than 5 mm, the insulation 18 can effectively reinforce the apex 24. The insulation 18 effectively suppresses deformation from the end 38 of the apex 24. With the tire 2, excellent ride comfort is achieved even when a high load is applied thereto. From this standpoint, the height Lo is more preferably not less than 7 mm. The height Lo is preferably not greater than 15 mm. By making the height Lo not greater than 15 mm, the influence of the insulation 18 on the stiffness of the side portion is appropriately suppressed. With the tire 2, deterioration of ride comfort due to increase in the stiffness is suppressed. With the tire 2, excellent ride comfort is achieved. From this standpoint, the height Lo is more preferably not greater than 13 mm. The height Lo is most preferably 10 mm.

In FIG. 2, a double-headed arrow T represents the thickness of the insulation 18. Here, the thickness T is measured at the position of the end 38 of the apex 24. The thickness T is the thickness of the insulation 18 at the position of the end 38 of the apex 24. The thickness T is preferably not less than 0.3 mm. By making the thickness T not less than 0.3 mm, the insulation 18 can effectively reinforce the apex 24. The insulation 18 effectively suppresses deformation from the end 38 of the apex 24. With the tire 2, excellent ride comfort is achieved even when a high load is applied thereto. From this standpoint, the thickness T is more preferably not less than 0.5 mm. The thickness T is preferably not greater than 1.2 mm. By making the thickness T not greater than 1.2 mm, the influence of the insulation 18 on the stiffness of the side portion is appropriately suppressed. With the tire 2, deterioration of ride comfort due to increase in the stiffness is suppressed. With the tire 2, excellent ride comfort is achieved. From this standpoint, the thickness T is more preferably not greater than 1.0 mm. The thickness T is most preferably 0.7 mm.

A hardness HD of the insulation 18 is preferably not less than 70. By making the hardness HD not less than 70, the insulation 18 can effectively reinforce the apex 24. The insulation 18 effectively suppresses deformation from the end 38 of the apex 24. With the tire 2, excellent ride comfort is achieved even when a high load is applied thereto. From this standpoint, the hardness HD is more preferably not less than 80. The hardness HD is preferably not greater than 98. By making the hardness HD not greater than 98, the influence of the insulation 18 on the stiffness of the side portion is appropriately suppressed. With the tire 2, deterioration of ride comfort due to increase in the stiffness is suppressed. With the tire 2, excellent ride comfort is achieved. From this standpoint, the hardness HD is more preferably not greater than 95. The hardness HD is most preferably 90.

In the present invention, the hardness HD of the insulation 18 is measured according to the standard of "JIS K6253" with a type A durometer. The hardness is measured by pressing the durometer against a test piece formed from the material of the insulation 18. The measurement is performed at 23°C.

In FIG. 2, a double-headed arrow Lb represents the height in the radial direction from the bead base line BBL to the end 38 of the apex 24. The height Lb is preferably not less than 18 mm. By making the height Lb not less than 18 mm, the bead 8 effectively contributes to the stiffness of the side portion. The side portion has stiffness that can withstand a great load. With the tire 2, excellent ride comfort is achieved even when a high load is applied thereto. The height Lb is preferably not greater than 30 mm. By making the height Lb not greater than 30 mm, the influence of the bead 8 on the stiffness of the side portion is appropriately suppressed. With the tire 2, deterioration of ride comfort due to increase in the stiffness is suppressed. With the tire 2, excellent ride comfort is achieved. From this standpoint, the height Lb is more preferably not greater than 25 mm. The height Lb is most preferably not greater than 19 mm.

In the present invention, the dimensions and angles of the tire 2 and the respective components of the tire 2 are measured in a state where the tire 2 is mounted on a normal rim and inflated with air to a normal internal pressure. During the measurement, no load is applied to the tire 2. In the present specification, the normal rim means a rim specified in a standard on which the tire 2 is based. The "Standard Rim" in the JATMA standard, the "Design Rim" in the TRA standard, and the "Measuring Rim" in the ETRTO standard are normal rims. In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

### EXAMPLES

Hereinafter, effects of the present invention are shown by means of examples, but the present invention should not be construed in a limited manner on the basis of the description of these examples.

### [Example 1]

A two-wheeled vehicle tire of Example 1 having the structure shown in FIG. 1 was obtained. The size of the tire was set to 160/60R15. The specifications of the tire are shown in Table 1. In the table, "Between B and C" described in the row for "Insulation position" indicates that each insulation is located between the bead and the main portion of the carcass ply. In the tire, the insulation extends from between the bead and the main portion toward the shoulder portion. In the tire, the height Hap of the apex was set to 14 mm, and the height Lb from the bead base line to the end of the apex was set to 19 mm. The height Lg from the center of gravity of the apex to the end of the apex is 9 mm. Therefore, in the tire, the height Li is equal to or greater than the height Lg. This is indicated as "Yes" in the row for "Li ≥ Lg".

### [Comparative Example 1]

A tire of Comparative Example 1 was obtained in the same manner as in Example 1, except that insulations are not included.

### [Comparative Example 2]

In a tire of Comparative Example 2, each insulation is located inward of the main portion of the carcass ply in the axial direction. This is indicated as "Inward of C" in the cell for "Insulation position" in Table 1. In the tire, the others are the same as in Example 1.

### [Comparative Example 3 and Examples 2 to 5]

Tires of Comparative Example 3 and Examples 2 to 5 were obtained in the same manner as in Example 1, except that the height Li was set as shown in Table 2. A minus value of the height Li indicates that the inner edge of each insulation is located outward of the end of the apex.

### [Comparative Example 4 and Examples 6 to 9]

Tires of Comparative Example 4 and Examples 6 to 9 were obtained in the same manner as in Example 1, except that the height Lo was set as shown in Table 3. A minus value of the height Lo indicates that the outer edge of each insulation is located inward of the edge of the tread.

### [Examples 10 to 13]

Tires of Examples 10 to 13 were obtained in the same manner as in Example 1, except that the thickness T was set as shown in Table 4.

### [Examples 14 to 17]

Tires of Examples 14 to 17 were obtained in the same manner as in Example 1, except that the hardness HD was set as shown in Table 5.

### [Ride Comfort]

Each sample tire was fitted to a standard rim (size = MT5.00×15) and mounted to the rear wheel of a two-wheeled vehicle having an engine displacement of 530 cc. The internal pressure of the tire was set to 250 kPa. A commercially available tire was mounted to the front wheel of the two-wheeled vehicle and inflated with air such that the internal pressure thereof became 250 kPa. The two-wheeled vehicle was caused to run on a circuit course having a dry asphalt road surface, and sensory evaluation for ride comfort was made by the rider. The results are indicated as indexes in Tables 1 to 5 below. The higher the value is, the better the result is.

### [Table 1]

**Table 1 Results of Evaluation**

| | Comparative Example 1 | Comparative Example 2 | Example 1 |
|---|---|---|---|
| Insulation position | - | Inward of C | Between B and C |
| Thickness T [mm] | - | 0.7 | 0.7 |
| Hardness HD | - | 90 | 90 |
| Height Li [mm] | - | 9.5 | 9.5 |
| Li ≥ Lg | - | Yes | Yes |
| Height Lo [mm] | - | 10 | 10 |
| Ride comfort | 70 | 85 | 110 |

### [Table 2]

**Table 2 Results of Evaluation**

| | Comparative Example 3 | Example 2 | Example 3 | Example 4 | Example 5 |
|---|---|---|---|---|---|
| Insulation position | Between B and C | Between B and C | Between B and C | Between B and C | Between B and C |
| Thickness T [mm] | 0.7 | 0.7 | 0.7 | 0.7 | 0.7 |
| Hardness HD | 90 | 90 | 90 | 90 | 90 |
| Height Li [mm] | -5 | 5 | 8 | 15 | 20 |
| Li ≥ Lg | No | No | No | Yes | Yes |
| Height Lo [mm] | 10 | 10 | 10 | 10 | 10 |
| Ride comfort | 80 | 90 | 100 | 100 | 90 |

### [Table 3]

**Table 3 Results of Evaluation**

| | Comparative Example 4 | Example 6 | Example 7 | Example 8 | Example 9 |
|---|---|---|---|---|---|
| Insulation position | Between B and C | Between B and C | Between B and C | Between B and C | Between B and C |
| Thickness T [mm] | 0.7 | 0.7 | 0.7 | 0.7 | 0.7 |
| Hardness HD | 90 | 90 | 90 | 90 | 90 |
| Height Li [mm] | 9.5 | 9.5 | 9.5 | 9.5 | 9.5 |
| Li ≥ Lg | Yes | Yes | Yes | Yes | Yes |
| Height Lo [mm] | -5 | 3 | 5 | 15 | 20 |
| Ride comfort | 80 | 90 | 100 | 100 | 90 |

### [Table 4]

**Table 4 Results of Evaluation**

| | Example 10 | Example 11 | Example 12 | Example 13 |
|---|---|---|---|---|
| Insulation position | Between B and C | Between B and C | Between B and C | Between B and C |
| Thickness T [mm] | 0.25 | 0.3 | 1.2 | 1.3 |
| Hardness HD | 90 | 90 | 90 | 90 |
| Height Li [mm] | 9.5 | 9.5 | 9.5 | 9.5 |
| Li ≥ Lg | Yes | Yes | Yes | Yes |
| Height Lo [mm] | 10 | 10 | 10 | 10 |
| Ride comfort | 90 | 100 | 100 | 90 |

### [Table 5]

**Table 5 Results of Evaluation**

| | Example 14 | Example 15 | Example 16 | Example 17 |
|---|---|---|---|---|
| Insulation position | Between B and C | Between B and C | Between B and C | Between B and C |
| Thickness T [mm] | 0.7 | 0.7 | 0.7 | 0.7 |
| Hardness HD | 68 | 70 | 98 | 99 |
| Height Li [mm] | 9.5 | 9.5 | 9.5 | 9.5 |
| Li ≥ Lg | Yes | Yes | Yes | Yes |
| Height Lo [mm] | 10 | 10 | 10 | 10 |
| Ride comfort | 90 | 100 | 100 | 90 |

As shown in Tables 1 to 5, the tires of the examples are highly rated as compared to the tires of the comparative examples. From the results of evaluation, advantages of the present invention are clear.

The tire described above is applicable to various two-wheeled vehicles.

## Claims

1. A two-wheeled vehicle tire (2) comprising a tread (4), a pair of beads (8), a carcass (10), and a pair of insulations (18) formed from a crosslinked rubber, wherein the carcass (10) includes a carcass ply (26),
the carcass ply (26) includes a main portion (28) extending from an axially inner side of one of the beads (8) to an axially inner side of the other of the beads (8),
each insulation (18) extends from between the bead (8) and the main portion (28) to a vicinity of a shoulder portion of the tread (4),
each bead (8) includes a core (22) and an apex (24) extending from the core (22) outward in a radial direction, and
in the radial direction, an inner edge (36) of the insulation (18) is located inward of an end (38) of the apex (24), and an outer edge (32) of the insulation (18) is located outward of an edge (34) of the tread (4)
**characterized in that** when a center of gravity of the apex (24) on a cross-section perpendicular to a circumferential direction is denoted by G, the height Li in the radial direction from the inner edge (36) of the insulation (18) to the end (38) of the apex (24) is equal to or greater than a height Lg in the radial direction from the center of gravity G to the end (38) of the apex (24).

2. The two-wheeled vehicle tire (2) according to claim 1, wherein a height Li in the radial direction from the inner edge (36) of the insulation (18) to the end (38) of the apex (24) is equal to or greater than half a height Hap, in the radial direction, of the apex (24).

3. The two-wheeled vehicle tire (2) according to any one of claims 1 or 2, wherein the height Li in the radial direction from the inner edge (36) of the insulation (18) to the end (38) of the apex (24) is not less than 8 mm and not greater than 15 mm.

4. The two-wheeled vehicle tire (2) according to any one of claims 1 to 3, wherein a height Lo in the radial direction from the edge (34) of the tread (4) to the outer edge (32) of the insulation (18) is not less than 5 mm and not greater than 15 mm.

5. The two-wheeled vehicle tire (2) according to any one of claims 1 to 4, wherein the insulation (18) has a thickness T of not less than 0.3 mm and not greater than 1.2 mm.

6. The two-wheeled vehicle tire (2) according to any one of claims 1 to 5, wherein the insulation (18) has a hardness HD of not less than 70 and not greater than 98, wherein the hardness HD of the insulation (18) is measured according to the standard of JIS K6253 with a type A durometer at 23°C.

7. The two-wheeled vehicle tire (2) according to any one of claims 1 to 6, wherein a height Lb from a bead base line (BBL) to the end (38) of the apex (24) is not less than 18 mm and not greater than 30 mm.

## Patentansprüche

1. Zweiradfahrzeugreifen (2), umfassend eine Lauffläche (4), ein Paar Wülste (8), eine Karkasse (10) und ein Paar Isolierungen (18), die aus einem vernetzten Kautschuk gebildet sind, wobei
die Karkasse (10) eine Karkasslage (26) umfasst,
die Karkasslage (26) einen Hauptabschnitt (28) umfasst, der sich von einer axial inneren Seite von einem der Wülste (8) zu einer axial inneren Seite von dem anderen der Wülste (8) erstreckt,
jede Isolierung (18) sich von zwischen dem Wulst (8) und dem Hauptabschnitt (28) bis zu einer Umgebung eines Schulterabschnitts der Lauffläche (4) erstreckt,
jeder Wulst (8) einen Kern (22) und einen Kernreiter (24) umfasst, der sich vom Kern (22) in einer radialen Richtung nach außen erstreckt,
in der radialen Richtung eine innere Kante (36) der Isolierung (18) innen von einem Ende (38) des Kernreiters (24) gelegen ist, und eine äußere Kante (32) der Isolierung (18) außen von einer Kante (34) der Lauffläche (4) gelegen ist,
**dadurch gekennzeichnet, dass**, wenn ein Schwerpunkt des Kernreiters (24) an einem Querschnitt senkrecht zu einer Umfangsrichtung mit G bezeichnet ist, die Höhe Li in radialer Richtung von der inneren Kante (36) der Isolierung (18) bis zu dem Ende (38) des Kernreiters (24) gleich oder größer als eine Höhe Lg in der radialen Richtung von dem Schwerpunkt G bis zu dem Ende (38) des Kernreiters (24) ist.

2. Zweiradfahrzeugreifen (2) nach Anspruch 1, wobei eine Höhe Li in der radialen Richtung von der inneren Kante (36) der Isolierung (18) bis zu dem Ende (38) des Kernreiters (24) gleich oder größer als eine halbe Höhe Hap in der radialen Richtung der Kernreiters (24) ist.

3. Zweiradfahrzeugreifen (2) nach einem der Ansprüche 1 oder 2, wobei die Höhe Li in der radialen Richtung von der inneren Kante (36) der Isolierung (18) bis zu dem Ende (38) des Kernreiters (24) nicht kleiner als 8 mm und nicht größer als 15 mm ist.

4. Zweiradfahrzeugreifen (2) nach einem der Ansprüche 1 bis 3, wobei eine Höhe Lo in der radialen Richtung von der Kante (34) der Lauffläche (4) zu der äußeren Kante (32) der Isolierung (18) nicht kleiner als 5 mm und nicht größer als 15 mm ist.

5. Zweiradfahrzeugreifen (2) nach einem der Ansprüche 1 bis 4, wobei die Isolierung (18) eine Dicke T von nicht weniger als 0,3 mm und nicht mehr als 1,2 mm aufweist.

6. Zweiradfahrzeugreifen (2) nach einem der Ansprüche 1 bis 5, wobei die Isolierung (18) eine Härte HD von nicht weniger als 70 und nicht mehr als 98 aufweist, wobei die Härte HD der Isolierung (18) gemäß dem Standard von JIS K6253 mit einem Durometer vom Typ A bei 23° C gemessen ist.

7. Zweiradfahrzeugreifen (2) nach einem der Ansprüche 1 bis 6, wobei eine Höhe Lb von einer Wulstgrundlinie (BBL) bis zu dem Ende (38) des Kernreiters (24) nicht kleiner als 18 mm und nicht größer als 30 mm ist.

## Revendications

1. Pneumatique pour véhicule à deux roues (2) comprenant une bande de roulement (4), une paire de talons (8), une carcasse (10), et une paire d'isolants (18) formés à partir d'un caoutchouc réticulé, dans lequel
la carcasse (10) inclut une nappe de carcasse (26),
la nappe de carcasse (26) inclut une portion principale (28) s'étendant depuis un côté axialement intérieur de l'un des talons (8) jusqu'à un côté axialement intérieur de l'autre des talons (8),
chaque isolant (18) s'étend depuis entre le talon (8) et la portion principale (28) jusqu'à un voisinage d'une portion d'épaulement de la bande de roulement (4),
chaque talon (8) inclut une âme (22) et une coiffe (24) s'étendant depuis l'âme (22) vers l'extérieur dans une direction radiale, et
dans la direction radiale, un bord intérieur (36) de l'isolant (18) est situé à l'intérieur d'une extrémité (38) de la coiffe (24), et un bord extérieur (32) de l'isolant (18) est situé à l'extérieur d'un bord (34) de la bande de roulement (4),
**caractérisé en ce que** lorsqu'un centre de gravité de la coiffe (24) sur une section transversale perpendiculaire à une direction circonférentielle est désignée par G, la hauteur Li dans la direction radiale depuis le bord intérieur (36) de l'isolant (18) jusqu'à l'extrémité (38) de la coiffe (24) est égale ou supérieure à une hauteur Lg dans la direction radiale depuis le centre de gravité G jusqu'à l'extrémité (38) de la coiffe (24).

2. Pneumatique pour véhicule à deux roues (2) selon la revendication 1, dans lequel une hauteur Li dans la direction radiale depuis le bord intérieur (36) de l'isolant (18) jusqu'à l'extrémité (38) de la coiffe (24) est égale ou supérieure à la moitié d'une hauteur Hap, dans la direction radiale, de la coiffe (24).

3. Pneumatique pour véhicule à deux roues (2) selon l'une quelconque des revendications 1 ou 2, dans lequel la hauteur Li dans la direction radiale depuis le bord intérieur (36) de l'isolant (18) jusqu'à l'extrémité (38) de la coiffe (24) n'est pas inférieure à 8 mm et n'est pas supérieure à 15 mm.

4. Pneumatique pour véhicule à deux roues (2) selon l'une quelconque des revendications 1 à 3, dans lequel une hauteur Lo dans la direction radiale depuis le bord (34) de la bande de roulement (4) jusqu'au bord extérieur (32) de l'isolant (18) n'est pas inférieure à 5 mm et n'est pas supérieure à 15 mm.

5. Pneumatique pour véhicule à deux roues (2) selon l'une quelconque des revendications 1 à 4, dans lequel l'isolant (18) a une épaisseur T qui n'est pas inférieure à 0,3 mm et qui n'est pas supérieure à 1,2 mm.

6. Pneumatique pour véhicule à deux roues (2) selon l'une quelconque des revendications 1 à 5, dans lequel l'isolant (18) a une dureté HD qui n'est pas inférieure à 70 et qui n'est pas supérieure à 98, dans lequel la dureté HD de l'isolant (18) est mesurée en accord avec la norme JIS K6252 avec un appareil de mesure de dureté de type A à 23°C.

7. Pneumatique pour véhicule à deux roues (2) selon l'une quelconque des revendications 1 à 6, dans lequel une hauteur Lb depuis une ligne de base de talon (BBL) jusqu'à l'extrémité (38) de la coiffe (24) n'est pas inférieure à 18 mm et n'est pas supérieure à 30 mm.
